(19) Europäisches Patentamt
European Patent Office
Office européen des brevets

(11) **EP 2 279 864 A1**

(12) **EUROPEAN PATENT APPLICATION**

(43) Date of publication:
**02.02.2011 Bulletin 2011/05**

(51) Int Cl.:
**B32B 37/00** (2006.01)   **B32B 37/18** (2006.01)
**B29C 70/68** (2006.01)

(21) Application number: **09166751.9**

(22) Date of filing: **29.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Gemalto SA**
**92197 Meudon (FR)**

(72) Inventor: **Chabut, Françoise**
**92197  Meudon (FR)**

(74) Representative: **Fragnaud, Aude**
**Gemalto SA**
**Intellectual Property Department**
**6, rue de la Verrerie**
**92197 Meudon Cedex (FR)**

(54) **Frame for keeping the shape of a product and method of manufacturing said product.**

(57)     The invention relates to a frame for keeping the shape of a product (5) to be welded by lamination, wherein :
- the frame comprises an opening (3) in which the product (5) is placed for lamination, and

- the frame material has a softening temperature higher than lamination temperature, so that the frame keeps its shape during lamination and that if the product (5) flows, it flows inside the frame.

The invention also relates to a method of manufacturing a product (5) to be welded.

Fig.1

EP 2 279 864 A1

**Description**

The invention relates to a frame for keeping the shape of a product to be welded. The invention also relates to a method of manufacturing such a product.

An example of such product is an identification card (driving license, identity card, electronic passport, and so on). Identification cards are generally made with several layers coated or not, made in plastic material, such as polycarbonate, polyvinyl chloride (PVC), polyethylene terephthalate (PET) or acrylonitrile butadiene styrene (ABS). It may also be combination of these plastic materials.

Personalized information of the card's owner, such as photo, name, birth date may be printed into one or more of these layers. Printed technology for personalized data may be any existing personalization printing technology, such as sublimation, thermal transfer, retransfer, inkjet, laser engraving.

Further, these layers are welded by means of conventional technology, such as lamination, in order to result to a single piece.

However, during lamination the product is heated up to its softening temperature and starts to flow. For instance, in case of polycarbonate card, the card is heated up to 150°C which is the polycarbonate softening temperature.

Consequently, after lamination the product looses its original shape and becomes not compliant with standard.

It is well known to produce a product slightly bigger than targeted size, for instance 2 to 10 mm bigger than targeted size, and after lamination, to punch it to reach the targeted size.

However, the manufacturing of the product needs the two steps of lamination and then punching, the latter producing unwanted waste.

One object of the invention is to overcome the drawback of state of the art by permitting to keep product shape after lamination, even if the product is heated up to softening temperature.

This object is achieved according to the invention by a frame for keeping the shape of a product to be welded by lamination, wherein the frame comprises an opening in which the product is placed for lamination, and the frame material has a softening temperature higher than lamination temperature, so that the frame keeps its shape during lamination and that if the product flows, it flows inside the frame.

According further embodiments of the invention :

- the frame material is made of metal,
- the frame material is made of thermo-resistant plastic being configured to maintain the product during lamination without adhesion between the frame and the product,
- the frame material is made of polyethylene terephthalate,
- the opening size matches the product standard maximal size,
- the opening size matches the product targeted size, so that during lamination the product flows inside the frame taking the shape defined by the opening, and then reaches said targeted size,
- the frame thickness is smaller than the product standard minimal thickness,
- the frame thickness matches the product standard minimal thickness,
- the frame thickness is chosen high enough in order to prevent the product to flow between the frame and lamination plates.

The invention also relates to a method of manufacturing a product to be welded, said method comprising the following steps :

- the product is placed in the opening of a frame between two lamination plates,
- the product and the frame are pressed and heated up to a lamination temperature until the product is welded, said lamination temperature being lower than the frame softening temperature, so that the frame keeps its shape during lamination.

According further embodiments of the invention :

- the opening size matches the product targeted size, and the lamination temperature reaches the product softening temperature, so that the product flows inside the frame during lamination, in order to take the shape defined by the opening,
- the product size is smaller than the product standard minimal size,
- the lamination plates size is larger than the product size,
- the lamination plates size matches the product size,
- said method is a personalized information embedding method of an identification card.

Further details and advantages of the invention will become apparent from the exemplary embodiments explained below with reference to figures, in which:

- figure 1 is a schematic view of a frame receiving a product for lamination, being disposed between lamination plates,
- figure 2 is an above view of frame of figure 1,
- figure 3 is a schematic cross-sectional view I-I of figure 1,
- figure 4 is a partial schematic cross-sectional view of the product received in the frame during lamination, and
- figure 5 is a partial schematic cross-sectional view of a finished product received in the frame after lamination.

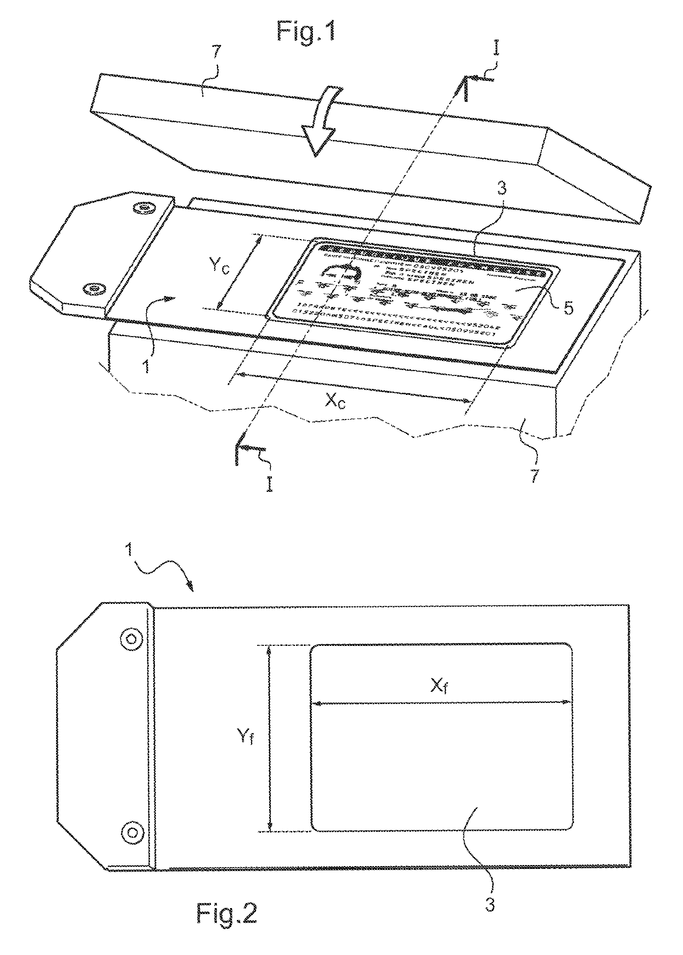

Figure 1 shows :

- a frame 1 with an opening 3,
- a product 5 received in the opening 3,
- two lamination plates 7 between which the frame 1 and the product 5 are placed.

In the example described, the product 5 is an identification card 5, by instance made of polycarbonate, with a softening temperature around 150°C. Of course, the product 5 may be made of other plastic materials or combination of several plastic materials.

The product 5 may also be security document or identification document, an electronic passport, a driving license, a money card, a GSM card, any product with card format, or any product with data carrier such as a "data page" of a passport.

The product 5 may also be a portable object comprising a plastic object body composed of plastic sheet(s), and an antenna whose two terminals are connected to connection pads of an integrated circuit chip embedded in the card body

Generally, an identification card 5 is made of several layers to be welded by lamination, for example, for embedding personalized information printed onto layers of the identification card 5. For that, the lamination plates 7 heat the card 5 up to a lamination temperature.

This invention may be applied when a second lamination is needed and card 5 is already at the final size. This second lamination can be used for instance to give a finishing to card body such as embossing, or insert a security feature.

The size of the identification card 5 depends on standard (ISO standard), which define minimal and maximal standard size. More precisely, the card 5 length $X_c$ must be comprised between a minimal $X_{min}$ and a maximal $X_{max}$ standard lengths (relation (1)).

$$(1)\ X_{min} \leq X_c \leq X_{max}$$

In this example of identification card, the minimal standard length $X_{min}$ may be 85.47 mm and the maximal standard length $X_{max}$ may be 85.72 mm.

Similarly, the card 5 width $Y_c$ must be comprised between a minimal $Y_{min}$ and a maximal $Y_{max}$ standard widths (relation (2)).

$$(2)\ Y_{min} \leq Y_c \leq Y_{max}$$

In this example of identification card, the minimal standard width $Y_{min}$ may be 53.92 mm and the maximal standard width $Y_{max}$ may be 54.03 mm.

The frame 1 receiving the card 5 in its opening 3 during lamination is made of a material with a softening temperature higher than the lamination temperature, in order to keep its shape during lamination and not to flow. For example, the frame 1 may be made of metal or thermo-resistant plastic, such as polyethylene terephthalate, said plastic being configured to maintain the card 5 during lamination without adhesion between the frame 1 and the card 5.

The opening 3 of the frame 1 shown in more detail on figure 2, is designed taking into account the card 5 standards. Therefore, the opening 3 size can't be smaller than the minimal standard size $X_{min}, Y_{min}$ nor larger than the maximal standard size $X_{max}, Y_{max}$, so that if the card 5 flows during lamination and takes the shape defined by the opening 3, the card 5 final shape is still comprised within standard sizes.

For example, the opening 3 size matches the maximal standard size (relation (3)) and can receive almost all cards 5.

$$(3)\ Xf = Xmax\ ;\quad \text{(where Xf is the length of the opening 3)}$$
$$Yf = Ymax\quad \text{(where Yf is the width of the opening 3)}$$

Alternatively, the opening 3 size can match the targeted size of the card 5 and the card 5 size Xc,Yc can be any size, even smaller than the minimal standard size Xmin,Ymin.

$$(4)\ Xf = X\ ;\quad \text{(where X is the targeted length)}$$
$$Yf = Y\quad \text{(where Y is the targeted width)}$$

This targeted size may be an average value. By instance with a minimal standard length Xmin of 85.47 mm and a maximal standard length Xmax of 85.72 mm, the average value for targeted length X is 85.6 mm.

Likewise, with a minimal standard width Ymin of 53.92 mm and a maximal standard width Ymax of 54.03 mm, the average value for targeted width Y is 53.97 mm.

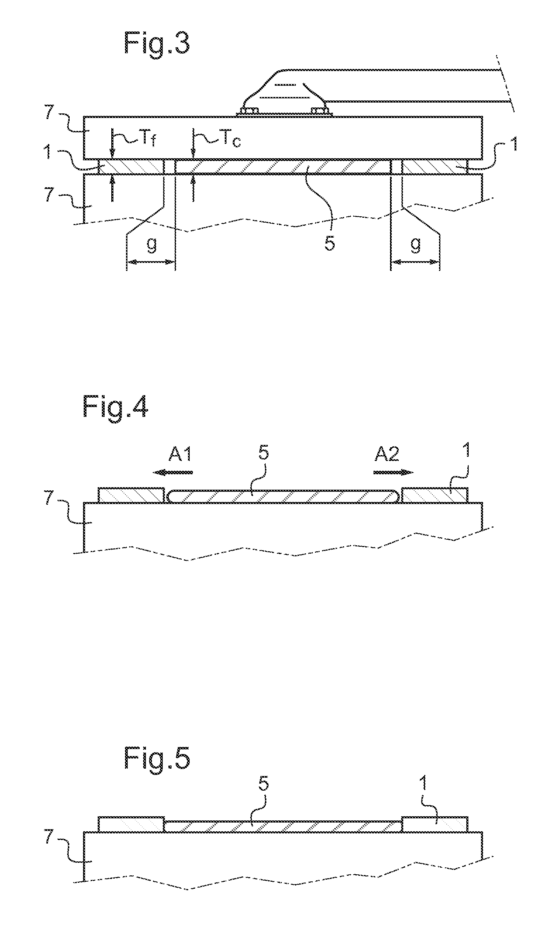

Further, the frame 1 thickness Tf (figure 3) is chosen smaller than or equal to the card 5 standard minimal thickness Tc (relation (5)), so that during lamination, the lamination plates 7 can touch the card 5 to weld the several layers.

$$(5)\ Tf \le Tc$$

By instance, for a card 5 with a thickness Tc of $820\mu m$, the frame thickness Tf may be $600\mu m$

In the example schematically illustrated on figure 3, the frame thickness Tf matches the card thickness Tc.

Of course, the frame thickness is chosen high enough, so that if the card 5 flows during lamination, it doesn't flow between the frame 1 and the lamination plates 7, but only inside the frame 1. Moreover, the thickness depends on lamination parameters.

The lamination plates 7 can be designed larger or same as the card 5.

Thus, according a first embodiment of the invention, the opening 3 size Xf,Yf matches the card 5 targeted size X,Y

The card 5 is placed in the opening 3 of the frame 1 between both lamination plates 7 with a gap g between the card 5 and the frame 1 (see figures 1 and 3), for example when a second lamination is needed and card 5 is already at the final size to give a finishing to card 5 such as embossing, or insert a security feature.

Then the lamination plates 7 press the card 5 and the frame 1 (figure 3) and heat up to a lamination temperature. In this first embodiment, the lamination temperature reaches the softening temperature of card 5. In the example of an identification card 5 of polycarbonate, the lamination temperature reaches 150°C.

At such temperature, the card 5 is forced to flow inside the opening 3. Each side of the card 5 flows respectively in a direction illustrated by the arrows A1 and A2 (figure 4).

Contrary to the card 5, at such temperature the frame 1 doesn't flow and is hard enough to maintain the card 5 during lamination without adhesion between the frame 1 and the card 5.

Then, the layers of the card 5 are welded and the card 5 takes the shape defined by the opening 3 (figure 5) so that there is no more gap g between the frame 1 and the card 5. This, the card 5 reaches the targeted size X,Y

Thus, with such a method the shape of the card 5 is kept during a lamination step where the card must be heated at higher temperature than its softening point.

According a second embodiment, the opening 3 size Xf,Yf matches the standard maximal size Xmax,Ymax. So, the frame 1 can receive almost all cards.

If the card 5 flows during lamination, and takes the shape defined by the opening 3, the card 5 final size is still compliant with standard.

Consequently, such a frame 1 permits to keep the shape of the product 5 even if the card 5 flows during lamination. So, an additional step of punching is not needed anymore.

## Claims

1. Frame for keeping the shape of a product (5) to be welded by lamination, wherein :

- the frame comprises an opening (3) in which the product (5) is placed for lamination, and
- the frame material has a softening temperature higher than lamination temperature,

so that the frame keeps its shape during lamination and that if the product (5) flows, it flows inside the frame.

2. Frame according to claim 1, wherein the frame material is made of metal.

3. Frame according to claim 1, wherein the frame material is made of thermo-resistant plastic being configured to maintain the product (5) during lamination without adhesion between the frame (1) and the product (5).

4. Frame according to claim 3, wherein the frame material is made of polyethylene terephthalate.

5. Frame according to one of claims 1 to 4, wherein the opening (3) size matches the product (5) standard maximal size.

6. Frame according to one of claims 1 to 5, wherein the opening (3) size matches the product (5) targeted size, so that during lamination the product (5) flows inside the frame taking the shape defined by the opening (3), and then reaches said targeted size.

7. Frame according to one of claims 1 to 6, wherein the frame thickness (Tf) is smaller than the product standard minimal thickness.

8. Frame according to one of claims 1 to 6, wherein the frame thickness (Tf) matches the product standard minimal thickness.

9. Frame according to one of claims 7 or 8, wherein the frame thickness (Tf) is chosen high enough in order to prevent the product (5) to flow between the frame and lamination plates (7).

10. Method of manufacturing a product (5) to be welded, said method comprising the following steps :

   - the product (5) is placed in the opening (3) of a frame (1) between two lamination plates (7),
   - the product (5) and the frame (1) are pressed and heated up to a lamination temperature until the product (5) is welded, said lamination temperature being lower than the frame (1) softening temperature, so that the frame (1) keeps its shape during lamination.

11. Method according to claim 10, wherein :

   - the opening (3) size matches the product (5) targeted size, and
   - the lamination temperature reaches the product (5) softening temperature, so that the product (5) flows inside the frame (1) during lamination, in order to take the shape defined by the opening (3).

12. Method according to claim 11, wherein the product (5) size (Xc,Yc) is smaller than the product standard minimal size.

13. Method according to one of claims 10 to 12, wherein the lamination plates (7) size is larger than the product (5) size (Xc,Yc).

14. Method according to one of claims 10 to 12, wherein the lamination plates (7) size matches the product (5) size (Xc,Yc).

15. Method according to one of claims 10 to 14, wherein said method is a personalized information embedding method of an identification card.

Fig.1

Fig.2

## Fig.3

## Fig.4

## Fig.5

Europäisches
Patentamt

European
Patent Office

Office européen
des brevets

**EUROPEAN SEARCH REPORT**

Application Number

EP 09 16 6751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/131931 A1 (MURPHY WILLIS A [US]) 17 July 2003 (2003-07-17) * paragraphs [0002], [0023], [0028]; figures 1-4 * | 1-15 | INV. B32B37/00 B32B37/18 B29C70/68 |
| X | DE 42 06 742 A1 (CHALLENGE CARD DESIGN PLASTIKK [DE]) 9 September 1993 (1993-09-09) * column 5, lines 1-30; figures 1,2 * | 1-15 | |
| X | US 3 870 582 A (BRACKETT ROBERT D ET AL) 11 March 1975 (1975-03-11) * column 6, lines 22-68; figures 4-6 * | 1-15 | |
| A | DE 198 54 986 A1 (GIESECKE & DEVRIENT GMBH [DE]) 31 May 2000 (2000-05-31) * column 2, line 58 - column 3, line 20; figures 9-11 * | 1-15 | |
| | | | TECHNICAL FIELDS SEARCHED (IPC) B32B B29C |

The present search report has been drawn up for all claims

| Place of search | Date of completion of the search | Examiner |
|---|---|---|
| Munich | 12 January 2010 | Golombek, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 279 864 A1

**ANNEX TO THE EUROPEAN SEARCH REPORT
ON EUROPEAN PATENT APPLICATION NO.**

EP 09 16 6751

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2010

| Patent document cited in search report | | Publication date | Patent family member(s) | | Publication date |
|---|---|---|---|---|---|
| US 2003131931 | A1 | 17-07-2003 | US | 2004026414 A1 | 12-02-2004 |
| DE 4206742 | A1 | 09-09-1993 | NONE | | |
| US 3870582 | A | 11-03-1975 | NONE | | |
| DE 19854986 | A1 | 31-05-2000 | AT | 314699 T | 15-01-2006 |
| | | | AU | 1652700 A | 19-06-2000 |
| | | | WO | 0033248 A1 | 08-06-2000 |
| | | | EP | 1147488 A1 | 24-10-2001 |

For more details about this annex : see Official Journal of the European Patent Office, No. 12/82